(19) Europäisches Patentamt

European Patent Office

Office européen des brevets

(11) Veröffentlichungsnummer: **0 430 384 A1**

(12) **EUROPÄISCHE PATENTANMELDUNG**

(21) Anmeldenummer: 90250291.3

(22) Anmeldetag: 23.11.90

(51) Int. Cl.⁵: **B66C 1/40**, B66C 13/16, G01G 19/14, B66C 1/12, F16G 15/00

(30) Priorität: 23.11.89 DE 3938985
23.11.89 DE 3938986

(43) Veröffentlichungstag der Anmeldung:
05.06.91 Patentblatt 91/23

(84) Benannte Vertragsstaaten:
AT FR GB IT SE Patentblatt

(71) Anmelder: **RUD-Kettenfabrik Rieger & Dietz GmbH u. Co.**
**Friedensinsel**
**W-7080 Aalen 1(DE)**

(72) Erfinder: **Smetz, Reinhard, Dipl.-Ing. (FH)**
**Eichendorffstrasse 14**
**W-8860 Baldingen(DE)**

(74) Vertreter: **Böning, Manfred, Dr. Ing. et al**
**Patentanwälte Dipl.-Ing. Dieter Jander Dr.**
**Ing. Manfred Böning Leistikowstrasse 2**
**W-1000 Berlin 19(DE)**

(54) **Bauteil für Lastaufnahmesysteme.**

(57) Bei einem Bauteil für Lastaufnahmesysteme, wie es insbesondere in Verbindung mit Hebezeugen zum Einsatz gelangt und welches ein erstes Anschlußorgan (1) für das Ende eines Zugstranges (3) und ein zweites Anschlußorgan (12) zur Aufnahme einer Last aufweist, sind die Anschlußorgane (1,12) gegen die Wirkung von Federn (13,14) um begrenzte Beträge zueinander verschiebbar. Zur Erzielung einer stabilen Bauweise ist das erste Anschlußorgan (1) mit einem Bügel (4) verbunden, der parallele zylindrische Schenkel (5,6) aufweist. Auf diesen Schenkeln (5,6) ist mit Hilfe von Führungsbohrungen (8,9) ein Joch (10) geführt, an dem das zweite Anschlußorgan (12) befestigt ist.

Fig. 2

EP 0 430 384 A1

## BAUTEIL FÜR LASTAUFNAHMESYSTEME

Die Erfindung betrifft ein Bauteil für Lastaufnahmesysteme mit einem ersten Anschlußorgan für das Ende mindestens eines als Kette, Seil oder Band ausgebildeten Zugstranges sowie mit mindestens einem weiteren Anschlußorgan für die aufzunehmende Last, bei dem das Anschlußorgan für die aufzunehmende Last einen Träger aufweist, der gegen die Wirkung von zu einer Kraftanzeigevorrichtung gehörenden Federelementen verschiebbar gegenüber dem ersten Anschlußorgan gelagert ist.

Aus der FR-OS 24 03 549 ist ein Bauteil der vorstehenden Art bekannt, bei dem das als Haken ausgebildete Anschlußorgan für die aufzunehmende Last gelenkig mit einem Zapfen verbunden ist, dessen Ende einen Flansch formt, der sich über Kugeln auf einem Ringbund einer Hülse abstützt, die ihrerseits gegen die Wirkung einer sie umschließenden Feder verschiebbar in einer Buchse gelagert ist, welche einen Teil eines Rollenblockes für ein Seil bildet. Der Aufbau des bekannten Bauteiles ist nicht nur verhältnismäßig kompliziert, sondern auch vergleichsweise labil.

Bei einem aus der DE-AS 26 06 240 bekannten anderen einschlägigen Bauteil, dessen Anschlußorgan für die aufzunehmende Last ebenfalls von einem Haken gebildet wird und dessen Anschlußorgan für den Zugstrang als Gabelkopf ausgebildet ist, besteht der Träger für den Haken aus einem scheibenförmigen Kopfglied, das gegen ein Ende einer den Hakenschaft umgebenden Tellerfeder anliegt, deren an deres Ende von einem den Hakenschaft umgebenden Ringsteg des Anschlußorganes für den Zugstrang gehalten wird. Zur Lastanzeige dient bei diesem Bauteil mindestens ein gegenüber Sichtöffnungen an einem Anschlußorgan verschiebbares Sichtband am anderen Anschlußorgan.

Bekannt ist schließlich aus der DE-PS 33 19 773 ein mit einer Verkürzungsvorrichtung versehenes Bauteil, bei dem die Verkürzungsvorrichtung in einem Joch angeordnet ist, das zwei Führungsbohrungen für parallele Schenkel eines Bügels aufweist. Bei diesem Bauteil fehlen sowohl das Joch abstützende Federn als auch jegliche Mittel zur Kraftanzeige. Um bei Verwendung dieses Bauteiles mithin einen Anhalt für die unter Last auftretenden Kräfte zu gewinnen, bedarf es besonderer, beispielsweise zwischen dem Anschlußteil und einem Aufhängeglied für letzteres angeordneter Kraft- oder zumindest Überlastanzeigevorrichtungen.

Der Erfindung liegt die Aufgabe zugrunde, ein Bauteil der in Betracht gezogenen Art zu schaffen, das einfach und stabil aufgebaut ist und sich insbesondere für den Einsatz in Verbindung mit Anschlagketten eignet. Diese Aufgabe wird erfindungsgemäß dadurch gelöst, daß der Träger von einem Joch mit mindestens zwei Führungsbohrungen für parallele Schenkel eines mit dem ersten Anschlußorgan verbundenen Bügels gebildet wird und die Enden der Schenkel mit Widerlagern für sie jeweils umschließende Federn versehen sind.

Das erfindungsgemäße Bauteil bietet den Vorteil, daß bei ihm ungeachtet der Integration von Federelementen für die Kraftanzeigevorrichtung mit einfachen Mitteln eine einwandfreie Führung des Anschlußorganes für die Last gegenüber dem Anschlußorgan für den Zugstrang bzw. dem mit diesem verbundenen Hebezeug gewährleistet ist. Sowohl der Bügel als auch das Joch lassen sich mit vertretbarem Aufwand vorzugsweise schmiedetechnisch herstellen. Dadurch, daß der Bügel und das Joch in allen Positionen des Joches einen geschlossenen Rahmen bilden, wird eine große Stabilität des erfindungsgemäßen Bauteiles erzielt. Die Schenkel des Bügels, der auch käfigartig ausgebildet sein kann, erfüllen eine Mehrfachfunktion, indem sie gleichzeitig Führungen bzw. Halterungen für das Joch und die Federn formen.

Weitere Einzelheiten und Merkmale des erfindungsgemäßen Bauteiles ergeben sich aus den Unteransprüchen und der nachfolgenden Beschreibung mehrerer in der beigefügten Zeichnung dargestellter Ausführungsbeispiele. Es zeigen:

Fig. 1 die Seitenansicht eines erfindungsgemäßen Bauteiles,

Fig. 2 die Vorderansicht des Bauteiles gemäß Fig. 1,

Fig. 3 einen Schnitt längs der Linie III-III in Fig. 1,

Fig. 4 einen Teilschnitt längs der Linie IV-IV in Fig. 3,

Fig. 5 eine Vorderansicht eines Bauteiles mit einer Verkürzungsvorrichtung,

Fig. 6 eine Seitenansicht des Bauteiles gemäß Fig. 5,

Fig. 7 einen Schnitt längs der Linie VII-VII in Fig. 5,

Fig. 8 im vergrößerten Maßstab eine Einzelheit des Bauteiles gemäß Fig. 5 - 7 im Schnitt,

Fig. 9 die Seitenansicht eines Bauteiles mit zwei Verkürzungsvorrichtungen,

Fig. 10 einen Teilschnitt durch ein Bauteil gemäß Fig. 9,

Fig. 11 einen Schnitt längs der Linie XI-XI in Fig. 9,

Fig. 12 teilweise im Schnitt die Vorderansicht eines Bauteiles mit drei Verkürzungseinrichtungen,

Fig. 13 eine Draufsicht auf das Bauteil gemäß Fig. 12,

Fig. 14 teilweise im Schnitt eine Teilvorderansicht eines Bauteiles mit vier Verkürzungsvorrichtungen,

Fig. 15 eine Draufsicht auf das Bauteil gemäß
Fig. 14,

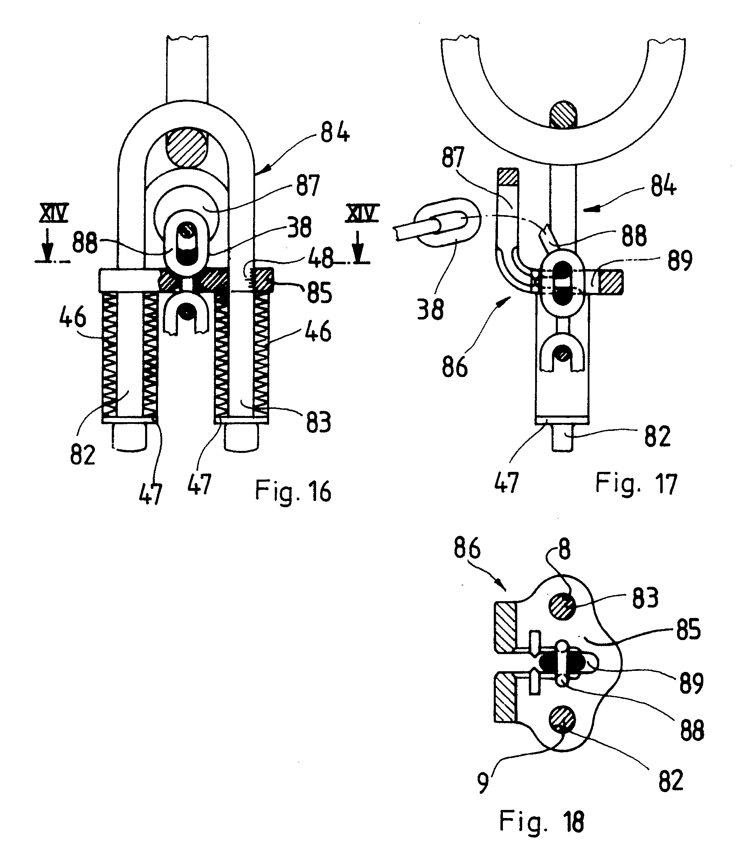

Fig. 16 teilweise im Schnitt die Vorderansicht
eines Bauteiles mit einer modifizierten Verkürzungsvorrichtung,

Fig. 17 teilweise im Schnitt die Seitenansicht
des Bauteiles gemäß Fig. 16,

Fig. 18 einen Schnitt längs der Linie XVIII-XVIII
in Fig. 16,

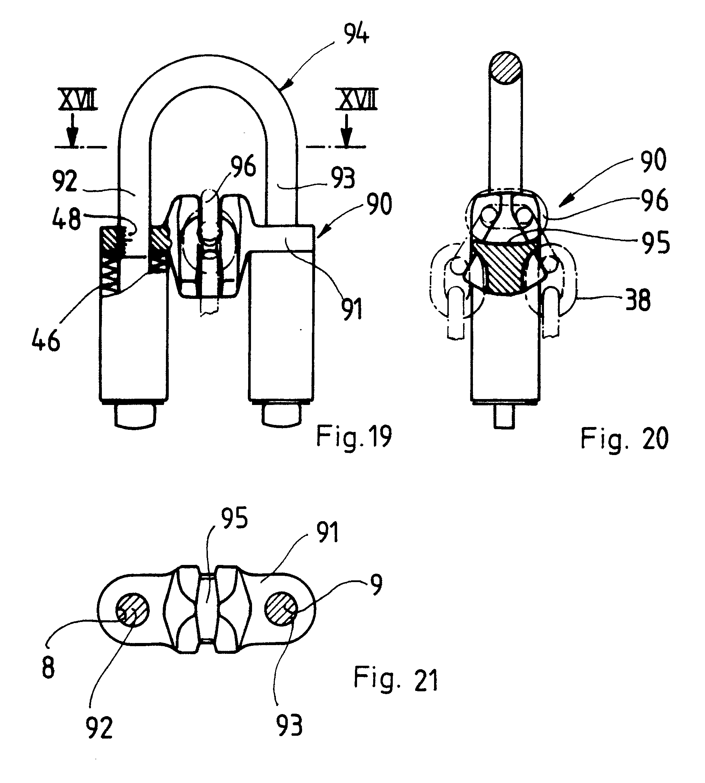

Fig. 19 teilweise im Schnitt die Vorderansicht
eines Bauteiles mit einer weiteren modifizierten
Verkürzungsvorrichtung,

Fig. 20 die Seitenansicht des Bauteiles gemäß
Fig. 19 und

Fig. 21 einen Schnitt längs der Linie XXI-XXI in
Fig. 19.

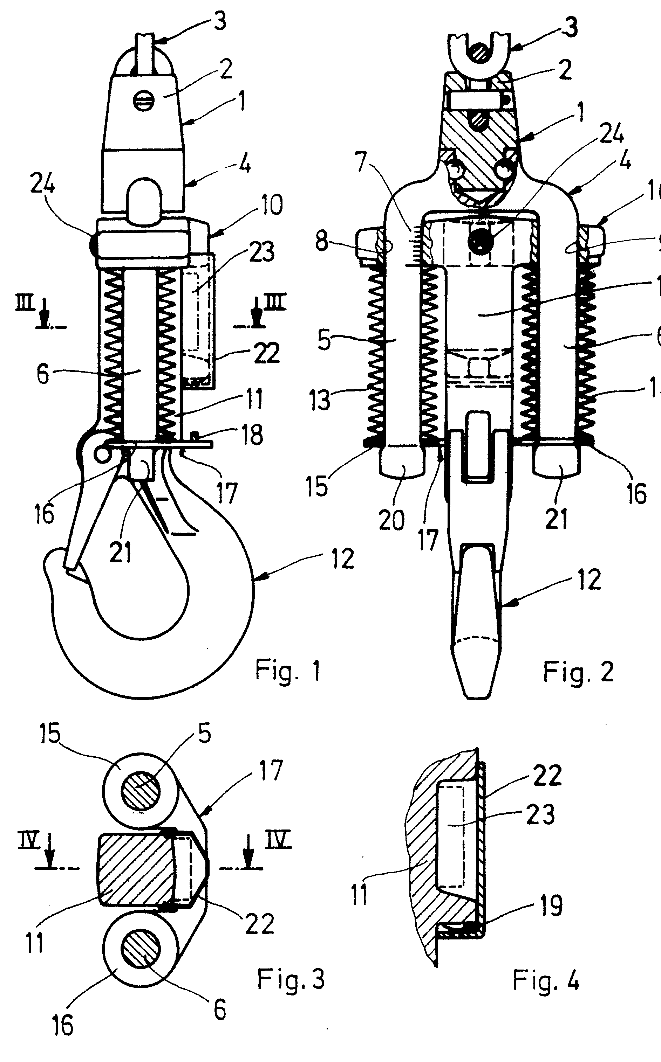

In Fig. 1 ist 1 das mit einem Gabelkopf 2
versehene Anschlußorgan für das letzte Glied eines
als Kettenstrang ausgebildeten, mit einem nicht
dargestellten Hebezeug verbundenen Zugstranges
3. Das Anschlußorgan 1 formt zusammen mit einem Bügel 4 einen Wirbel. Der Bügel 4 besitzt
zwei Schenkel 5 und 6, von denen der Schenkel 5
mit einer Skala 7 zur Kraftanzeige versehen ist. Die
Schenkel 5 und 6 sind in zwei Führungsbohrungen
8,9 eines Joches 10 geführt, das mit einem zentralen Schaft 11 versehen ist. Am dem Joch 10 abgewandten Ende des Schaftes 11 ist ein von einem
Haken gebildetes Anschlußorgan 12 für die jeweilige Last angeordnet. Das Joch 10 kann auf den
Schenkeln 5 und 6 Hin- und Herbewegungen ausführen, deren Größe von den Kennlinien zweier die
Schenkel 5 und 6 umschließender Federn 13,14
abhängt. Die Federn 13,14 stützen sich einerseits
gegen die Unterseite des Joches 10 und andererseits gegen Widerlager 15,16 ab, die von einer im
wesentlichen C-förmigen Platte 17 gebildet werden,
an der auch ein Stößel 18 befestigt ist. Der Stößel
18 dient zum Betätigen des Druckschalters 19 einer Grenzlastwarnanzeigevorrichtung. Gehalten
wird die Platte 17 durch Anschläge bildende verdickte Enden 20 und 21 der Schenkel 5,6, die bei
der bevorzugten Ausführung des Bügels 4 und des
Joches 10 als Schmiedeteile angeschmiedet sind.

Zur Grenzlastwarnanzeigevorrichtung gehört
ein durch ein Gehäuse 22 geschützter elektronischer Baustein 23 mit einer von einer Batterie
gebildeten Energiequelle. Beim Betätigen des
Druckschalters 19 durch den Stößel 18, dessen
Länge auf die Charakteristik der Federn 13,14 abgestimmt ist, versorgt der elektronische Baustein
23 einen akustischen oder optischen Signalgeber
24 mit Spannung, und dieser zeigt entweder durch
einen geeigneten Ton oder durch Aufleuchten an,
daß eine Gefahr der Überlastung des Bauteiles
bzw. des mit diesem verbundenen Zugstranges besteht. Die Warnanzeige kann über einen in die
Steuerung des Bausteines integrierten Verzögerungsschalter oder einen externen Ausschalter wieder ausgeschaltet werden.

Für den Fall, daß das Joch mehr als zwei
Führungsbohrungen aufweist, wird - wie weiter unten erläutert - ein Bügel mit einer entsprechenden
Anzahl von parallelen Schenkeln verwendet, d.h.
der Bügel erhält einen käfigähnlichen Charakter. In
der Praxis wird man im übrigen sämtliche Federn
jeweils einzeln mit einer flexiblen Umhüllung versehen, wie dies bei weiteren Ausführungsformen gezeigt ist.

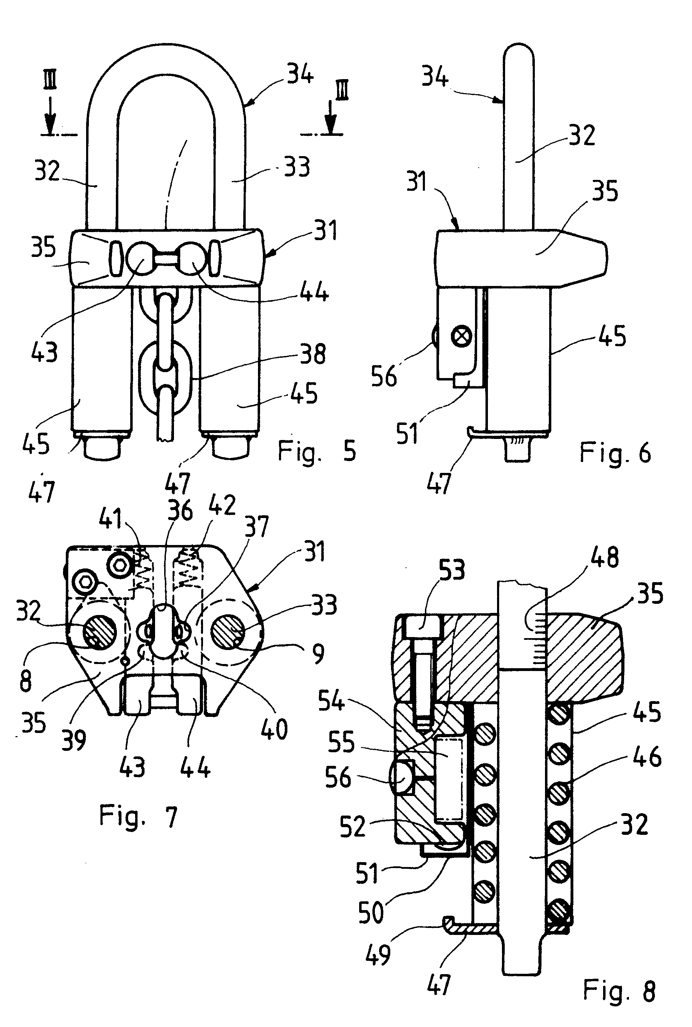

In den Fig. 5 - 8 ist ein Bauteil mit einer
einzelnen Verkürzungsvorrichtung 31 dargestellt,
die ein die Schenkel 32 und 33 eines Bügels 34
überbrückendes Joch 35 mit zwei sich kreuzenden
Schlitzen 36 und 37 aufweist. Durch die Schlitze 36
und 37 kann ein in Fig. 5 angedeuteter Kettenstrang 38 gezogen werden, wenn sich die Nuten
39,40 zweier gegen die Wirkung von Rückstellfedern 41,42 hin- und herverschiebbarer Arretierungsbolzen 43,44 im Bereich des Schlitzes 37
befinden, während jeweils ein mit seinem Bug in
den Schlitz 37 ragendes Kettenglied am Passieren
des Schlitzes 37 gehindert wird, wenn die Arretierungsbolzen 43,44 die in Fig. 8 dargestllte Position einnehmen.

Unterhalb des Joches 35 der Verkürzungsvorrichtung 1 sind zwei durch jeweils eine flexible
Hülse 45 geschützte Federn 46 angeordnet, die
sich mit ihren dem Joch 35 abgewandten Enden
gegen Widerlager 47 abstützen, die fest mit den
Schenkeln 32,33 verbunden sind und von denen
eines einen nach außen ragenden Vorsprung bildet.
Die Federn 46 bilden einen Teil einer Kraftanzeigevorrichtung, zu der außerdem eine relativ zum Joch
35 bewegbare Skala 48 gehört.

Zusätzlich zur Kraftanzeigevorrichtung ist auch
das Bauteil gemäß Fig. 5 - 8 mit einer Grenzlastwarnanzeigevorrichtung versehen, die einen vom
Vorsprung des Widerlagers 47 gebildeten Stößel
49 aufweist, der eine Öffnung 50 einer Schutzabdeckung 51 passieren und einen Druckschalter 52
betätigen kann. Der Druckschalter 52 ist an einem
mit dem Joch 35 durch eine Schraube 53 verbundenen Gehäuse 54 angeordnet, das wiederum einen elektronischen Baustein 55 mit einer Engeriequelle beherbergt. Der Baustein setzt bei Betätigung des Druckschalters 52 mindestens einen optischen oder akustischen Signalgeber 56 in Funktion.
Zum Abschalten des Signalgebers kann auch hier
ein nicht dargestellter, in den Baustein 55 integrierter Verzögerungsschalter oder aber ein externer
Ausschalter benutzt werden.

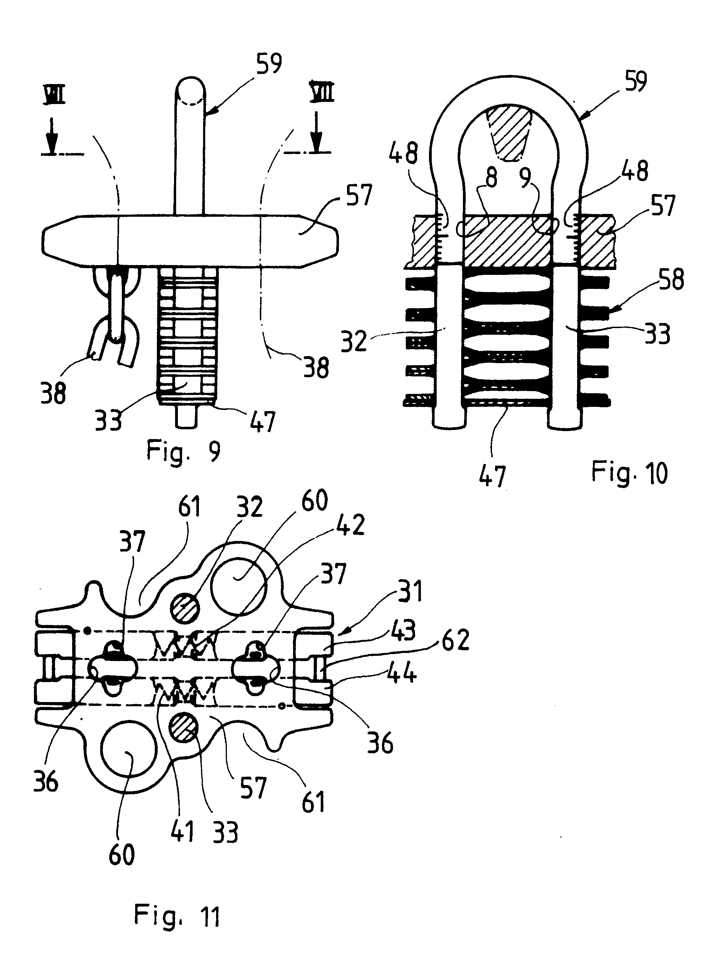

Die Fig. 9 - 11 zeigen ein Bauteil mit zwei
Verkürzungsvorrichtungen 31, deren Arretierungsbolzen 43,44 in einem gemeinsamen Joch 57 gelagert sind. Zum Abfedern des Joches dient hier eine Feder 58, die aus mehreren Federblättern besteht, die jeweils beide Schenkel 32 und 33 eines Bügels 59 umschließen. 60 sind Einhängeösen, in die sich an den Enden der verkürzbaren Kettenstränge 38 angeordnete Haken bei Bedarf, d.h. beispielsweise zur Bildung von Kranzketten einhängen lassen. Um das Überführen der Arretierungsbolzen 43,44 der Verkürzungsvorrichtung in ihre Freigabestellung für den Schlitz 37 zu erleichtern, ist das Joch mit Fingergriffmulden 61 versehen. Bei sich in der Fingergriffmulde 61 abstützendem Zeigefinger und in die Einhängeöse 60 eingeführtem Mittelfinger lassen sich die über einen Verbindungssteg 62 miteinander gekoppelten Arretierungsbolzen 43,44 bequem gegen die Wirkung der ihnen zugeordneten Rückstellfedern 41,42 verlagern.

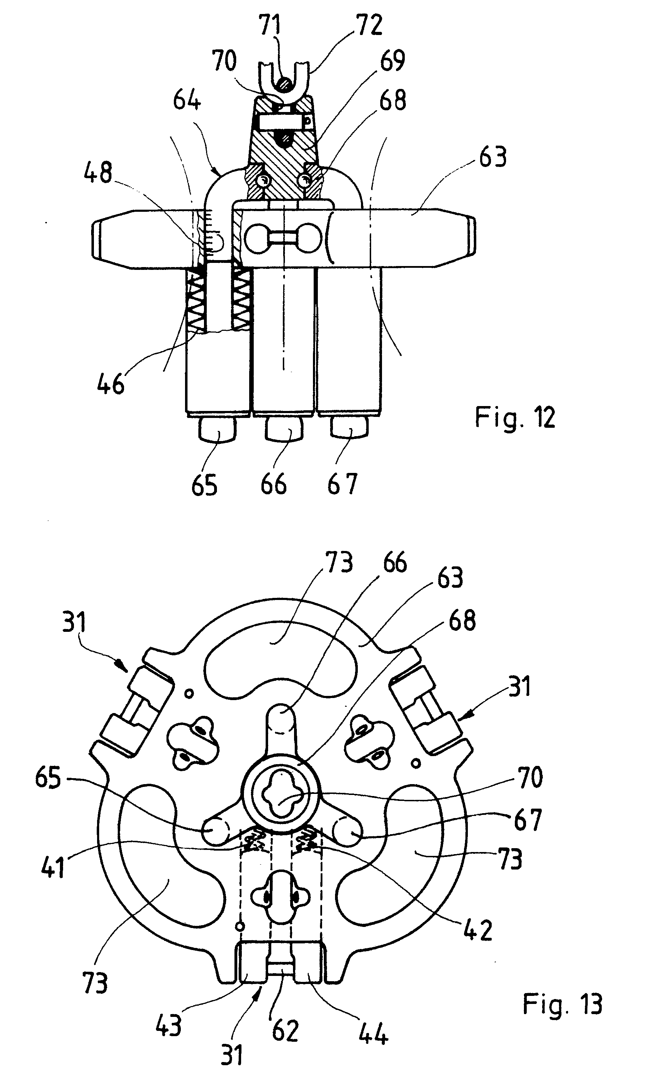

Das Bauteil gemäß den Fig. 12 und 13 ist mit drei Verkürzungsvorrichtungen 31 ausgestattet, deren Arretierungsbolzen 43,44 auch hier in einem gemeinsamen Joch 63 gelagert sind, welches in diesem Falle allerdings nicht steg-, sondern scheibenförmig ausgebildet ist. Das Joch 63 ist auf-und abbewegbar auf einem käfigartigen Bügel 64 mit drei Schenkeln 65,66,67 gelagert, die über einen Ringbund 68 miteinander verbunden sind, der einen ersten Teil eines Wirbels bildet, dessen zweiter Teil aus einem Anschlußorgan 69 besteht, in dessen Schlitz 70 das letzte Glied 71 eines Kettenstranges 72 einhängbar ist. Einhängeösen 73 im Joch 63 erleichtern auch hier die Betätigung der Verkürzungsvorrichtungen 31. Zur Kraftanzeige dient eine auf mindestens einem der Schenkel 65,66,67 angeordnete Skala 48, gegenüber der das Joch 63 Relativbewegungen ausführen kann. Die Teilung der Skala 40 hängt von den Federkennlinien der drei zur Abstützung des Joches 63 dienenden Federn 46 ab, die jeweils einen der Schenkel 65,66,67 umschließen.

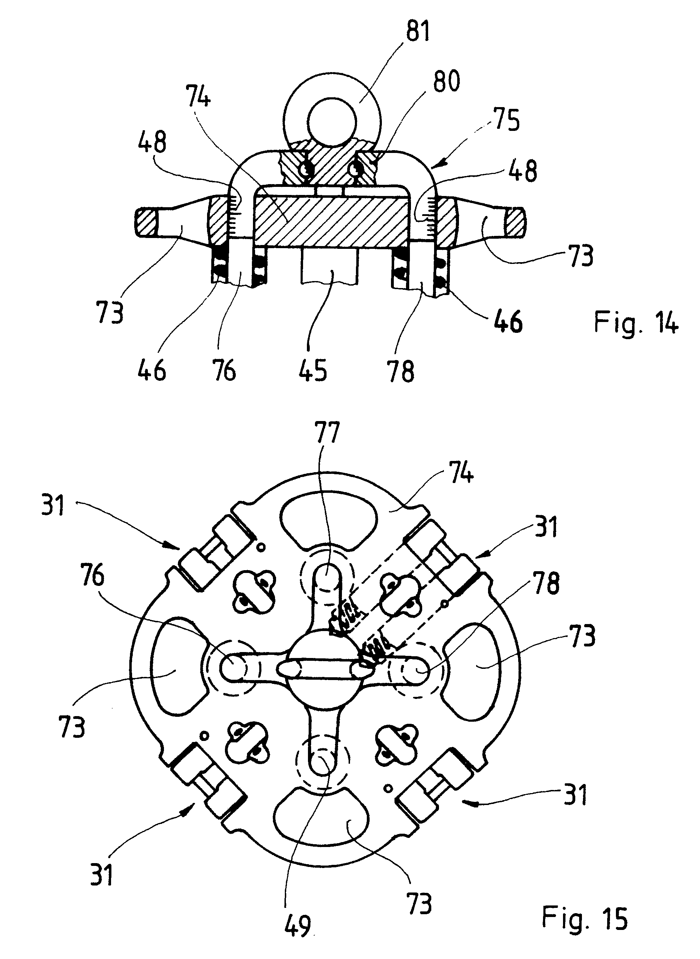

Statt eines scheibenförmigen Joches mit drei Verkürzungsvorrichtungen 31 kann auch ein scheibenförmiges Joch 71 mit vier Verkürzungsvorrichtungen 31 verwendet werden, wie es in den Fig. 14 und 15 dargestellt ist. Der Bügel 75 des Bauteiles gemäß Fig. 14 und 15 besitzt vier Schenkel 76,77, 78,79, d.h. die Zahl der Schenkel entspricht der Zahl der Verkürzungsvorrichtungen 31. Die den Federn 46 abgewandten Enden der Schenkel 76,77,78,79 gehen in einen Ringbund 80 über, der zusammen mit einem ösenförmigen Anschlußorgan 81 einen Wirbel bildet.

Die Grundkonzeption einer Kraft- bzw. Grenzlastwarnanzeigevorrichtung unter Verwendung eines auf den Schenkein eines Anschlußteiles federnd gelagerten Joches läßt sich auch in Verbindung mit anderen Verkrüzungsvorrichtungen realisieren, wie dies zwei weitere in den Fig. 16 bis 21 dargestellte Ausführungsbeispiele deutlich machen.

In den Fig. 16 bis 18 werden die beiden Schenkel 82 und 83 eines Bügels 84 durch ein Joch 85 überbrückt, das von einem Teil einer aus einer L-förmigen Schlitzlochlasche bestehenden, sehr einfachen Verkürzungsvorrichtung 86 gebildet wird. Durch ein Durchziehloch 87 der Schlitzlochlasche läßt sich der Kettenstrang 38 in die jeweils gewünschte Position überführen, in der er anschließend durch jeweils ein Kettenglied 88 gehalten wird, das auf das Glied folgt, welches in den Arretierungsschlitzen 89 der Schlitzlochlasche überführt wurde.

Die Verkürzungsvorrichtung 86 stützt sich auf von Tellerfederpaketen gebildeten, die Schenkel 82 und 83 umschliessenden Federn 46 ab, die um einen der zu übertragenden Kraft entsprechenden, an der Skala 48 ablesbaren Betrag deformierbar sind. Die Widerlager 47 für die Federn werden wie in allen zuvor beschriebenen Fällen durch abgedrückte Enden der Schenkel 82,83 gehalten.

Ein Bauteil mit einer weiteren modifizierten Verkürzungsvorrichtung 90 ist schließlich in den Fig. 19 - 21 dargestellt. Auch bei dieser Ausführungsform stützt sich ein Joch 91 auf Federn 16 ab, die die beiden Schenkel 92,93 eines Bügels 94 umschließen. Die Schenkel 92,93 erfüllen folglich wiederum eine Mehrfachfunktion, indem sie erstens eine Längsführung für die Verkürzungsvorrichtung 90, zweitens eine Halterung für die Federn 46 und drittens einen Träger für die Skala 48 der Kraftanzeigevorrichtung bilden. Zum Arretieren des Kettenstranges 38 der jeweiligen Verkürzungsposition dient in erster Linie eine Stütz- und Rastmulde 95, in die ein Glied 96 einhängbar ist. Beim Zusammenstellen von Kettengehängen mit mehreren Bauteilen der in den Figuren 1 bis 11 bzw. 16 bis 21 dargestellten Art wirkt sich das Vorhandensein der Federn 13,14;46 bzw. 58 im übrigen auch dahingehend positiv aus, daß sie einen gewissen Längen- und mithin Lastausgleich zwischen den Ketten des Gehänges ermöglichen.

## Ansprüche

1. Bauteil für Lastaufnahmesysteme mit einem ersten Anschlußorgan (1;69;81) für das Ende mindestens eines als Kette, Seil oder Band ausgebildeten Zugstranges (3) sowie mit mindestens einem weiteren Anschlußorgan (12) für die aufzunehmende Last, bei dem das Anschlußorgan (12) für die aufzunehmende Last einen Träger aufweist, der gegen die Wirkung von zu einer Kraftanzeigevorrichtung gehörenden Federelementen verschiebbar gegenüber dem ersten Anschlußorgan (1;69;81) gelagert ist, dadurch gekennzeichnet, daß der Träger von einem Joch (10;35;57;63;74;85;91) mit mindestens zwei Führungsbohrungen (8,9) für parallele Schenkel (5,6;32,33;65-67;76-79;82,83;92,93) eines mit dem ersten Anschlußorgan (1) verbundenen oder dieses formenden Bügels (4;34; 59;64;75;84;94) gebildet wird und die Enden der Schenkel (5,6;32,33;65-67;76-79;82,83;92,93) mit Widerlagern (15,16) für sie jeweils umschließende Federn (13,14;46;58) versehen sind.

2. Bauteil nach Anspruch 1, dadurch gekennzeichnet, daß das Anschlußorgan (12) für die aufzunehmende Last von einem Haken gebildet wird.

3. Bauteil nach Anspruch 1 oder 2, dadurch gekennzeichnet, daß das Joch (10) über einen zwischen den Schenkeln (5,6) des Bügels (4) angeordneten zentralen Schaft (11) mit dem Anschlußorgan (12) für die aufzunehmende Last verbunden ist.

4. Bauteil nach Anspruch 1, dadurch gekennzeichnet, daß das Joch (35;57;63;74;85;91) mit mindestens einer Verkürzungsvorrichtung (31;86;90) für jeweils einen zum Anschließen der aufzunehmenden Last dienenden Kettenstrang (38) versehen ist.

5. Bauteil nach Anspruch 4, dadurch gekennzeichnet, daß es mehrere Verkürzungsvorrichtungen (31) aufweist, wobei die Anzahl der Verkürzungsvorrichtungen (31) gleich der Zahl der Schenkel (65-67;76-79) des Bügels (64;84) ist.

6. Bauteil nach Anspruch 4 oder 5, dadurch gekennzeichnet, daß jede Verkürzungsvorrichtung (31) zwei sich kreuzende Schlitze (36,37) zum Führen des mit ihrer Hilfe verkürzbaren Kettenstranges (38) aufweist und mindestens jeweils einem der beiden Schlitze (36,37) ein gegen die Wirkung mindestens einer Rückstellfeder (41,42) verschiebbarer Arretierungsbolzen (43,44) für ein Glied des Kettenstranges (38) zugeordnet ist.

7. Bauteil nach einem der Ansprüche 4 bis 6, dadurch gekennzeichnet, daß jede Verkürzungsvorrichtung (86) von einer ein Durchziehloch (87) und einen sich hieran anschließenden Arretierungsschlitz (88) aufweisenden Schlitzlochlasche gebildet wird.

8. Bauteil nach einem der Ansprüche 4 bis 6, dadurch gekennzeichnet, daß jede Verkürzungsvorrichtung (90) von einem eine Stütz- und Rastmulde (95) für ein Glied (96) des Kettenstranges (38) aufweisenden Joch (91) gebildet wird.

9. Bauteil nach einem der Ansprüche 4 bis 8, dadurch gekennzeichnet, daß jeder Verkürzungsvorrichtung (31) eine Einhängeöse (60,73) für einen am verkürzbaren Kettenstrang angeordneten Haken zugeordnet ist.

10. Bauteil nach einem der Ansprüche 1 bis 9, dadurch gekennzeichnet, daß der Bügel (4;64;75) einen ersten Teil eines Wirbels bildet, dessen zweiter Teil das erste Anschlußorgan (1;69;81) formt.

11. Bauteil nach Anspruch 10, dadurch gekennzeichnet, daß der Bügel (64;84) mindestens drei parallele Schenkel (65-67;76-79) aufweist, die an ihrem Ende in einen Ringbund (68;80) übergehen, der einen Teil des Wirbels bildet.

12. Bauteil nach einem der Ansprüche 1 bis 11, dadurch gekennzeichnet, daß das erste Anschlußorgan (1) einen Gabelkopf (2) aufweist.

13. Bauteil nach einem der Ansprüche 1 bis 12, dadurch gekennzeichnet, daß die Federn (13,14) als Tellerfedern ausgebildet sind.

14. Bauteil nach einem der Ansprüche 1 bis 13, dadurch gekennzeichnet, daß mindestens einer der Schenkel (5,6) des Bügels (4) mit einer Skala (7) versehen ist, gegenüber der das Joch (10) von der Lastgröße abhängige Bewegungen ausführen kann.

15. Bauteil nach einem der Ansprüche 1 bis 14, dadurch gekennzeichnet, daß es mit einem optischen oder akustischen Signalgeber (24;56) versehen ist, dessen Signal bei Erreichen einer vorgegebenen Grenzlast ausgelöst wird.

16. Bauteil nach Anspruch 15, dadurch gekennzeichnet, daß zum Betätigen des Signalgebers (24;56) ein an einem mit einer Energiequelle versehenen elektronischen Baustein (23;55) angeordneter Druckschalter (19;52) dient.

17. Bauteil nach Anspruch 16, dadurch gekennzeichnet, daß der Baustein (23;55) und der Signalgeber (24;56) am Joch (10;35) angeordnet sind und ein in der Nähe der freien Enden der Schenkel (5,6;32,33) des Bügels (4;34) von diesen gehaltener Stößel (18;49) zur Betätigung des Druckschalters (19;52) dient.

18. Bauteil nach Anspruch 17, dadurch gekennzeichnet, daß der Stößel (18) an einer etwa C-förmigen Platte (17) angeordnet ist, die auch die Anschläge (15,16) für die Federn (13,14) bildet und die die Enden der Schenkel (5,6) miteinander verbindet.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

81

74    80

75

48    48

73

73    46

46    76    45    78    Fig. 14

77

74

31    31

76    78

73

73

31

31    73

49    Fig. 15

Fig. 16

Fig. 17

Fig. 18

Fig. 19

Fig. 20

Fig. 21

# EUROPÄISCHER RECHERCHENBERICHT

**Europäisches Patentamt**

Nummer der Anmeldung

EP 90 25 0291

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-C- 62 561 (REINHARDT) <br> * Insgesamt * | 1,2,3, 15 | B 66 C 1/40 <br> B 66 C 13/16 <br> G 01 G 19/14 <br> B 66 C 1/12 <br> F 16 G 15/00 |
| Y | | 4,12,13 ,16 | |
| Y | FR-A-2 307 751 (RUD-KETTENFABRIK RIEGER & DIETZ) <br> * Seite 7, Anspruch 1; Abbildungen 1-13 * | 4 | |
| Y | FR-A-1 567 396 (GERSTMANS) <br> * Seite 2, Zeilen 33-34; Seite 3; Seite 4, Zeilen 1-18 * | 12,13, 16 | |
| A | FR-A-1 134 414 (ETS. M. GRIFFET & CIE) | | |
| A | DE-A-3 723 173 (EISEN- UND DRAHTWERK ERLAU) | | |
| A,D | DE-A-3 319 773 (RUD-KETTENFABRIK RIEGER & DIETZ) | | |
| A | DE-U-6 903 899 (EISEN- UND DRAHTWERK ERLAU) | | |
| A | DE-A-3 903 138 (MAKINO) | | |

**RECHERCHIERTE SACHGEBIETE (Int. Cl.5)**

B 66 C
F 16 G
G 01 G

Der vorliegende Recherchenbericht wurde für alle Patentansprüche erstellt

| Recherchenort | Abschlußdatum der Recherche | Prüfer |
|---|---|---|
| DEN HAAG | 14-02-1991 | VAN DEN BERGHE E.J.J. |